# EUROPÄISCHE PATENTSCHRIFT

(11) **EP 2 803 617 B1**
(45) Veröffentlichungstag und Bekanntmachung des Hinweises auf die Patenterteilung: **27.12.2017**
(21) Anmeldenummer: 14180214.0
(22) Anmeldetag: 18.01.2012
(51) Int. Cl.: B66C 1/10, E04G 21/24, E04H 12/34, B28B 23/00, B66B 17/10, F03D 1/00, B66B 19/00, B66B 9/187, E04G 21/14, F02C 6/18, F16B 31/06, F16B 1/00, E04B 1/04, E04G 3/28, E04G 5/00, E04H 12/12, F24H 3/02, F03D 13/20, F03D 13/10, F16B 35/06

(54) **Verfahren zum Errichten eines Turms einer Windenergieanlage**
Method for constructing a tower of a wind energy generator
Procédé de construction d'une tour d'un générateur d'énergie éolienne

(30) Priorität: 26.01.2011 DE 102011003164
(43) Veröffentlichungstag der Anmeldung: 19.11.2014
(62) Teilanmeldung aus: 12700685.6
(73) Patentinhaber: Wobben Properties GmbH, 26607 Aurich (DE)
(72) Erfinder: van Ohlen, Hermann, 26529 Upgant-Schott (DE); Hölscher, Norbert, 26607 Aurich (DE); Honczek, Michael, 26632 Ihlow (DE); Kapitza, Jan, 26629 Großefehn (DE); Buck, Ralf, 26736 Krummhörn (DE)
(74) Vertreter: Eisenführ Speiser

(56) Entgegenhaltungen:
- EP-A2- 2 494 188
- WO-A-2004/038108
- DE-A1-102009 061 027
- Anonymous: "Taper pins with external thread, unhardened", , 26 April 2016 (2016-04-26), XP055268719, Retrieved from the Internet: URL:http://www.fasten.it/en/tech267/pins_- _cotter_pins_-_parallel_keys/dowel_and_tap er_pins/taper_pins_with_external_thread__u nhardened/ [retrieved on 2016-04-26]
- "TECHNISCHE Daten - Wegertseder GmbH - www.wegertseder.com DIN 7977 / ISO 8737 Kegelstifte mit Gewindezapfen", , 26 April 2016 (2016-04-26), XP055268693, Retrieved from the Internet: URL:http://www.schrauben-lexikon.de/downlo ad/tiso_8737.pdf [retrieved on 2016-04-26]

## Beschreibung

Die vorliegende Erfindung betrifft ein Verfahren zum Errichten eines Turms einer Windenergieanlage.
Verfahren zum Errichten eines Turms einer Windenergieanlage, insbesondere eines Betonturms, sind grundsätzlich bekannt. Zunächst wird ein Betonfundament vorgesehen. Ein Betonturm in Fertigbauweise ist aus mehreren Turmsegmenten zusammengesetzt. Solche Turmsegmente können als rohrförmige und damit zylinderähnliche Elemente, nämlich im Gegensatz zu einem Zylinder mit leicht konischer Form, vorgesehen sein. Bei größeren Turmdurchmessern kommt auch eine Unterteilung in Umfangsrichtung in Betracht, so dass beispielsweise zwei im Querschnitt etwa halbkreisförmige Element oder andere teilkreisförmige Segmente zusammengesetzt werden.

Zunächst werden ein Turmsegment oder mehrere Turmsegmente als erste unterste Turmebene auf dem Fundament aufgesetzt. Es ist wichtig, dass diese erste Ebene sehr sorgfältig ausgerichtet, nämlich ausnivelliert wird.

Im Weiteren wird der Turm sukzessive aufgebaut, indem weitere Turmsegmente auf den bis dahin aufgebauten Teilturm aufgesetzt werden. Die hierfür notwendigen Arbeiten entstehen somit zunehmend in höherer Höhe. Hierbei muss insbesondere kontrolliert werden, dass das jeweilige neue Turmsegment an exakt der richtigen, vorgesehenen Position angeordnet wird. Mittels eines Kranes wird so jedes Turmsegment sukzessive etwa an seinen Platz gehoben und ein Kranführer führt eine Feinpositionierung des betreffenden Turmsegmentes aus. Die genaue Positionierung jedes Turmsegmentes wird dann von den Arbeitern des Aufbauteams auf der besagten Arbeitsplattform manuell, also mit Muskelkraft vorgenommen. Insbesondere muss das betreffende Turmsegment regelmäßig in die korrekte Position gedreht werden. Das Aufbaupersonal hält das so per Hand ausgerichtete Turmsegment in der korrekten Position und der Kranführer senkt das Turmsegment dann langsam ab, während das Aufbauteam dafür sorgt, dass die ausgerichtete Position beibehalten wird. Es ist dabei zu berücksichtigen, dass ein solches Turmsegment etwa 5 bis 120 t wiegen kann. Es muss somit trotz Einsatz großer Muskelkräfte eine sehr feine Positionierung vorgenommen werden.

Dieses Verfahren zum Aufsetzen eines weiteren Turmsegmentes ist somit kompliziert, zeit- und arbeitsaufwändig und weist eine gewisse Fehleranfälligkeit. Zudem besteht die Gefahr von Verletzungen für die Arbeiter vor Ort, insbesondere die Gefahr von Quetschungen.

Ganz allgemein sei auf die Dokumente US 3,074,564 A, DE 10 2009 023 538 A1 und DE 20 2010 000 868 U1 verwiesen. Der DE 2009 061 027 offenbart ein Verfahren zum Errichten eines Turms einer Windenergieanlage umfassend die Schritte:
- Anordnen eines ersten Turmsegmentes auf einem Fundament oder einem Turmsegment, wobei das erste Turmsegment einen ersten und zweiten Zentrierdorn an seiner Oberseite aufweist,
wobei der erste und zweite Zentrierdorn zum Befestigen an einem ersten Turmsegment eines Betonturms einer Windenergieanlage und zum Führen eines zweiten Turmsegmentes des Betonturms beim Absenken des zweiten Turmsegments auf das erste Turmsegment ausgestaltet sind und einen Befestigungsabschnitt zum Befestigen an dem ersten Turmsegment, einen Führungsabschnitt zum Führen des zweiten Turmsegments aufweist,
wobei das zweite Turmsegment so teilweise auf das erste Turmsegment abgesenkt wird, dass ein erster Zentrierdorn in eine entsprechende erste Zentrierausnehmung an der Unterseite des zweiten Turmsegments teilweise eingreift. Der vorliegenden Erfindung liegt somit die Aufgabe zugrunde, wenigstens eines der oben aufgezeigten Probleme zu beheben oder zu verringern, insbesondere den Aufbau eines Turms einer Windenergieanlage effizienter zu gestalten, insbesondere den Aufbau eines Betonturms. Zumindest soll eine alternative Lösung vorgeschlagen werden.

Erfindungsgemäß wird ein Verfahren gemäß Anspruch 1 vorgeschlagen. In einem solchen Verfahren, weist ein erster Turmsegment einen ersten und einen zweiten Zentrierdorn an seiner Oberseite auf, wobei der erste Zentrierdorn einen kürzeren Führungsabschnitt als der zweite Zentrierdorn aufweist. Ein solcher Zentrierdorn ist zum Befestigen an einem ersten Turmsegment eines Betonturms einer Windenergieanlage vorgesehen und zum Führen eines zweiten Turmsegmentes des Betonturms beim Absenken des zweiten Turmsegmentes auf das erste Turmsegment. Hierzu weist der Zentrierdorn einen Befestigungsabschnitt zum Befestigen an dem ersten Turmsegment auf, sowie einen Führungsabschnitt zum Führen des zweiten Turmsegmentes. Der Zentrierdorn wird also an dem ersten und damit unteren Turmsegment befestigt. Der Führungsabschnitt ist entsprechend zum Führen des zweiten und damit oberen Turmsegmentes beim Absenken vorbereitet. Ein Windenergieanlagenturm in Fertigbauweise wird aus einer Vielzahl von Turmsegmenten zusammengesetzt, die insbesondere aufeinander aufgesetzt werden. Um insgesamt einen senkrechten und stabilen Turm zu erhalten, müssen alle Segmente sauber aufeinander aufgesetzt werden. Hierzu leistet der vorgeschlagene Zentrierdorn einen Beitrag und erreicht das möglichst präzise Aufeinandersetzen des zweiten Turmsegmentes auf das erste, also des oberen Turmsegmentes auf das untere. Erfindungsgemäß ist der Befestigungsabschnitt des Zentrierdorns mit einem Außengewinde, insbesondere einem Metallgewinde, vorgesehen zum Einschrauben in das erste Turmsegment. Somit ist an dem Turmsegment ein entsprechendes Gewinde zum Einschrauben des Zentrierdorns vorzusehen, das vorteilhaft einem oben beschriebenen Gewinde bzw. Sackloch mit Gewinde zum Aufnehmen einer Tragschlaufe oder anderem Tragmittel nach Art und Größe entspricht, insbesondere damit identisch ist. Der Zentrierdorn kann dann an der Oberseite des ersten Turmsegmentes in das Gewinde eingeschraubt und so befestigt werden. Bei Verwendung eines entsprechenden Gewindes wird hierdurch auch eine genaue Positionierung des Zentrierdorns in dem ersten Turmsegment erreicht. Erfindungsgemäß ist der Führungsabschnitt konisch ausgebildet und verjüngt sich in der zum Befestigungsabschnitt abgewandten Seite. Ist der Zentrierdorn also bestimmungsgemäß oben in das erste Turmsegment eingesetzt, insbesondere eingeschraubt, so verjüngt sich der Führungsabschnitt nach oben. Der Führungsabschnitt kann somit beispielsweise einem Kegelabschnitt entsprechen.
Der Führungsabschnitt kann vorzugsweise aus Kunststoff gefertigt sein. Hierdurch ist eine einfache Ausgestaltung des Zentrierdorns möglich und insbesondere kann seine Form auf einfache Weise hergestellt und reproduziert werden. Insbesondere ist der Führungsabschnitt des Zentrierdorns dazu vorgesehen, in eine korrespondierende Öffnung an der Unterseite des zweiten, also oberen Turmsegmentes, einzugreifen. Erfindungsgemäß, sind der Befestigungsabschnitt und der Führungsabschnitt konzentrisch um eine gemeinsame Achse ausgebildet. Hierdurch ist eine einfache Herstellung, platzsparende Lagerung und Transport möglich. Insbesondere aber vereinfacht dies die Handhabung und gewährleistet möglichst gute Handhabungseigenschaften und insbesondere Eigenschaften zur Führung des oberen Turmsegmentes beim Absenken.

Weiterhin wird ein Zentrierdornpaar bestehend aus zwei unterschiedlich großen Zentrierdornen vorgeschlagen. Dabei können insbesondere die Befestigungsabschnitte, also insbesondere ein Befestigungsabschnitt mit Gewinde die gleiche Größe aufweisen, wohingegen die Führungsabschnitte unterschiedlich groß sind. Bei Anordnung dieser beiden Zentrierdorne, also dieses Zentrierdornpaars an der Oberseite des ersten Turmsegments, also des unteren Turmsegmentes, ragen diese beiden Zentrierdorne somit unterschiedlich hoch über die Oberseite dieses ersten Turmsegmentes hinaus. Zum Ausrichten eines zweiten Turmsegmentes, das auf dem ersten Turmsegment aufgesetzt werden soll, wird das zweite Turmsegment zunächst mittels eines Kranes in eine schwebende Position etwa oberhalb des ersten Turmsegments befördert. Nun kann das zweite Turmsegment langsam so abgesetzt werden, dass eine Zentrierhülse in dem zweiten Turmsegment mit einer nach unten weisenden Öffnung sich oberhalb des größeren Zentrierdorns befindet und soweit abgesenkt wird, dass dieser größere Zentrierdorn zu einem Teil in die korrespondierende Zentrierhülse hineinreicht. Dabei wird dieses zweite Turmsegment nur so weit abgesenkt, dass der kleinere Zentrierdorn, also der Zentrierdorn mit dem kürzeren Führungsabschnitt noch frei ist. Die Unterseite des zweiten Turmsegmentes befindet sich also noch kurz oberhalb der obersten Spitze dieses kleineren Zentrierdorns. Durch den teilweisen Eingriff des größeren Zentrierdorns in seine entsprechende Zentrierhülse kann das zweite Turmsegment nun in eben diesem Bereich um den großen Zentrierdorn geschwenkt werden, bis eine weitere Zentrierhülse oberhalb des kleineren Zentrierdorns angeordnet ist. Nun kann das zweite Turmsegment weiter abgesenkt werden, so dass auch der kleinere Zentrierdorn in seine korrespondierende Hülse eingreift. Nun sind wenigstens zwei Zentrierdorne jeweils in einer Zentrierhülse teilweise eingeführt, nämlich zumindest der oben beschriebene größere und der oben beschriebene kleinere Zentrierdorn. Dieses zweite Turmsegment kann nun weiter abgesenkt werden und dabei übernehmen die vorzugsweise konischen Zentrierdorne die Positionierung des Turmsegmentes. Gemäß einer Ausführung die kein Teil der Erfindung ist, wird somit auch eine Zentrierhülse zum Einbetonieren in ein zweites Turmsegment eines Betonturms einer Windenergieanlage vorgeschlagen. Eine solche Zentrierhülse wird wie oben beschrieben zum Führen des zweiten Turmsegmentes beim Absenken auf ein erstes Turmsegment verwendet und soll dabei mit einem beschriebenen Zentrierdorn zusammenwirken. Eine solche Zentrierhülse weist zumindest einen Hohlraum mit einer Innenkontur zum Aufnehmen eines konischen Zentrierdorns auf und eine Öffnung zum Einführen eines konischen Zentrierdorns. Der Hohlraum und die Öffnung sind dabei insbesondere so ausgestaltet, also sowohl nach Form und Dimensionierung, dass sie mit einem entsprechenden Zentrierdorn zusammenwirken können. Mit anderen Worten sollte der entsprechende Zentrierdorn möglichst passgenau an die Zentrierhülse, also den Hohlraum der Zentrierhülse angepasst sein, dass er beim Einführen in eine Position geleitet wird.

Die Zentrierhülse weist eine Außenkontur zum Halten der Zentrierhülse in dem Beton des Turmsegmentes auf. Insoweit ist es vorteilhaft, wenn die Außenkontur beispielsweise einen Vorsprung, wie beispielsweise einen umlaufenden Vorsprung aufweist, um ein Herausfallen der Zentrierhülse aus dem ausgehärteten Beton zu vermeiden. Je nach Randbedingungen wie Rauigkeit des Materials der Zentrierhülse und gegebenenfalls weiterer Haltemittel kann es ausreichend sein, wenn die Außenkontur im Wesentlichen der Innenkontur des Hohlraums entspricht.

Vorzugsweise ist die Zentrierhülse im Wesentlichen aus Kunststoff gefertigt. Das wesentliche bezieht sich darauf, dass als Material für die Zentrierhülse Kunststoff verwendet wird, gegebenenfalls aber Halteelemente, wie ein Haltehaken oder dergleichen beispielsweise aus Metall oder einem anderen Material ergänzt sein können. Insbesondere die Ausgestaltung des Hohlraums ist auf einfache Art und Weise mittels eines Kunststoffmaterials beispielsweise im Spritzgussverfahren zu realisieren.

Vorzugsweise ist an der Zentrierhülse zudem ein Positionierabschnitt vorgesehen, der zum Positionieren und/oder Befestigen der Zentrierhülse in einer Betonform oder auf einer in dem Zusammenhang verwendeten Auflagefläche einer Betonform ausgebildet ist. Durch diesen Positionierabschnitt wird die Zentrierhülse möglichst exakt zentriert und anschließend erfolgt das Gießen des Betonsegmentes. Dabei muss gewährleistet sein, dass das Gießen des Betons in die entsprechende Segmentform die Zentrierhülse bzw. die Zentrierhülsen in ihrer Position und auch Ausrichtung belässt und nicht verschiebt oder anderweitig bewegt. Entsprechend wird die Zentrierhülse dann in das Turmsegment mit eingegossen. Dabei sollte die Öffnung nicht verschlossen werden, oder ein solcher Verschluss sollte so unwesentlich sein, dass er auf einfache Weise nach dem Aushärten wieder entfernt werden kann. Hierdurch entsteht entsprechend auf einfache Weise ein Turmsegment mit wenigstens einer auf einfache Weise eingearbeiteten Zentrierhülse und damit eine klar definierte Zentrierausnehmung, die mit einem Zentrierdorn zusammenwirken kann.

Entsprechend wird ein solches Turmsegment eines Betonturms mit einer darin einbetonierten Zentrierhülse vorgeschlagen.
Vorteilhaft ist somit, einen Zentriersatz vorzusehen, der wenigstens einen Zentrierdorn und eine daran angepasste Zentrierhülse aufweist.

Nachfolgend wird die Erfindung an Hand von Ausführungsbeispielen unter Bezugnahme auf die begleitenden Figuren beispielhaft erläutert.
- Figur 1: zeigt einen Zentrierdorn und eine Zentrierhülse in einer perspektivischen Ansicht.
- Figur 2: zeigt den Zentrierdorn und die Zentrierhülse der Figur 1 in einem teilweise zusammengesetzten Zustand.

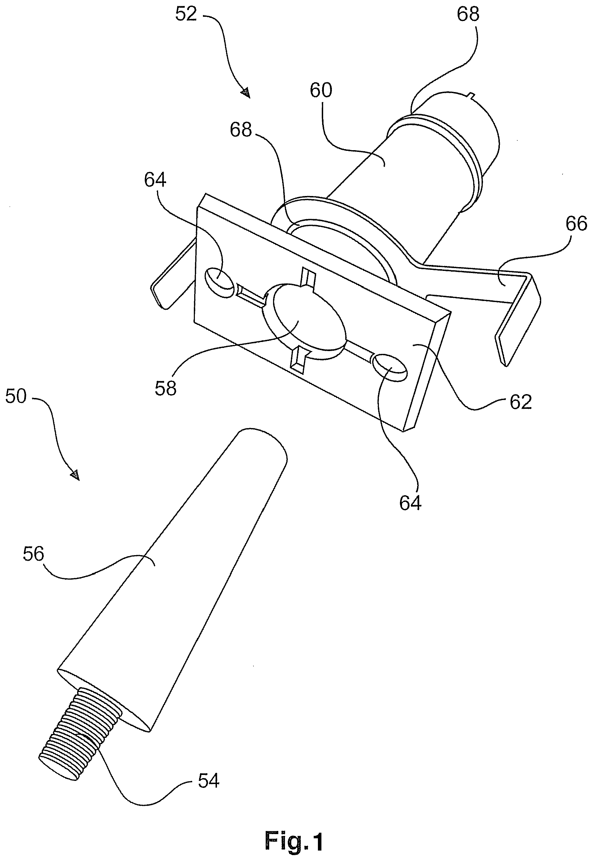

Figur 1 zeigt einen Zentrierdorn 50 und eine Zentrierhülse 52. Der Zentrierdorn 50 weist einen Befestigungsabschnitt 54 und einen Führungsabschnitt 56 auf. Der Befestigungsabschnitt 54 ist im Wesentlichen als Gewindestift ausgebildet und trägt den Führungsabschnitt 56, der konisch ausgebildet ist und sich von einer zum Befestigungsabschnitt 54 abweisenden Seite hin verjüngt. Der Führungsabschnitt 56 ist dabei in etwa kegelförmig ausgestaltet.
Die Zentrierhülse 52 zeigt eine Öffnung 58, durch die der Führungsabschnitt 56 des Zentrierdorns 50 in einen Hohlraum in der Zentrierhülse 52 eingeführt werden kann. In der Figur 5 ist von der Zentrierhülse 52 im Wesentlichen auch eine Außenkontur 60 zu erkennen, die im Grunde auch die Form einer Innenkontur des Hohlraums andeutet.
Die Zentrierhülse 52 ist dazu vorgesehen, in einem Turmsegment aus Beton bei dessen Herstellung mit einbetoniert zu werden, so dass im Wesentlichen die Öffnung 58 und zudem die Positionierungsplatte 62 an einer unteren Stoßfläche des Turmsegmentes noch zugänglich ist. Zum Einbetonieren weist die Positionierungsplatte 62 zwei Positionierungsausnehmungen 64 auf. Vor dem Einbetonieren wird die Zentrierhülse 52 mit der Positionierungsplatte 62 nach unten weisend auf eine ebene Fläche aufgesetzt, auf der auch eine Form zum Gießen des Turmsegmentes angeordnet wird. Auf dieser ebenen Flächen bzw. Platte sind für jede Zentrierhülse 52 jeweils zwei Zentriernasen vorgesehen, die jeweils in die Positionierungsausnehmungen 64 eingreifen und die Zentrierhülse 52 somit exakt positionieren. Die Positionierungsplatte 62 erreicht dabei eine möglichst genaue senkrechte Ausrichtung der zentrierhülse 52, insbesondere bezogen auf die Außenkontur 60, die den Hohlraum aufnimmt.
Zum Halten der Zentrierhülse 52 in dem Beton ist ein Halteblech 66 vorgesehen, der auch als Haltebügel bezeichnet werden kann und insbesondere die Zentrierhülse beim Vergießen des Beton in Position hält. Zudem unterstützen auch die umlaufenden abgerundeten Außenstege 68 eine guten Halt in dem Beton.

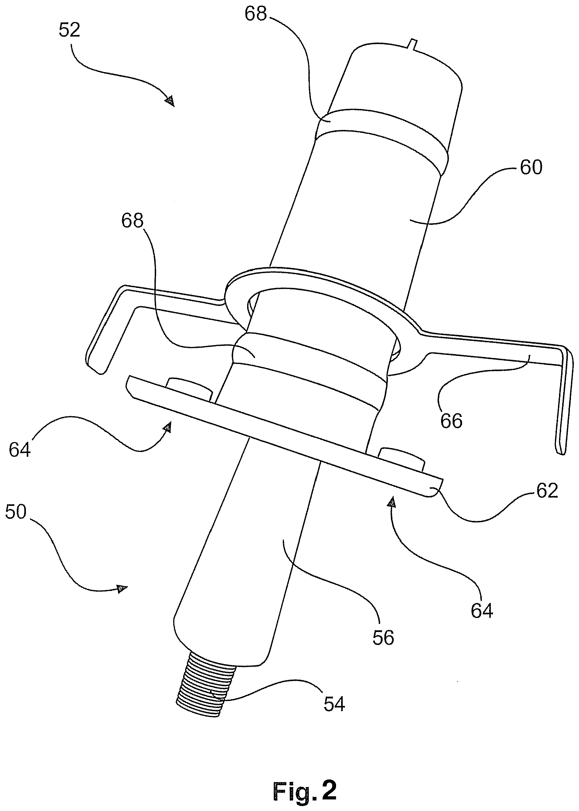

Figur 2 zeigt den Zentrierdorn 50 in einem teilweise in die Zentrierhülse 52 eingesetzten Zustand, zur Veranschaulichung. Im Gebrauch wird der Zentrierdorn 50, nämlich der Führungsabschnitt 56 erst beim Aufeinandersetzen zweier Turmsegmente in die Zentrierhülse 52 eingeführt, die dabei bereits in einen der beiden Turmsegment einbetoniert ist.

## Patentansprüche

1. Verfahren zum Errichten eines Turms einer Windenergieanlage umfassend die Schritte:
- Anordnen eines ersten Turmsegmentes auf einem Fundament oder einem Turmsegment,
wobei das erste Turmsegment einen ersten und zweiten Zentrierdorn an seiner Oberseite aufweist, wobei der erste Zentrierdorn einen kürzeren Führungsabschnitt aufweist als der zweite Zentrierdorn,
wobei der erste und zweite Zentrierdorn zum Befestigen an einem ersten Turmsegment eines Betonturms einer Windenergieanlage und zum Führen eines zweiten Turmsegmentes des Betonturms beim Absenken des zweiten Turmsegments auf das erste Turmsegment ausgestaltet sind und einen Befestigungsabschnitt zum Befestigen an dem ersten Turmsegment, einen Führungsabschnitt zum Führen des zweiten Turmsegments aufweist,
wobei der Befestigungsabschnitt ein Außengewinde, insbesondere ein Metallgewinde aufweist zum Einschrauben in das erste Turmsegment,
wobei der Führungsabschnitt konisch ausgebildet ist und sich in einer dem Befestigungsabschnitt abgewandten Richtung verjüngt,
wobei der Befestigungsabschnitt und der Führungsabschnitt konzentrisch um eine gemeinsame Achse ausgebildet sind,
- das zweite Turmsegment so teilweise auf das erste Turmsegment abgesenkt wird, dass ein erster Zentrierdorn in eine entsprechende erste Zentrierausnehmung an der Unterseite des zweiten Turmsegments teilweise eingreift,
- das zweite Turmsegment um eine Achse des ersten Zentrierdorns und der entsprechenden ersten Zentrieraufnahme geschwenkt wird, bis eine zweite Zentrieraufnahme an der Unterseite des zweiten Turmsegments etwa oberhalb des zweiten Zentrierdorns angeordnet ist,
- das zweite Turmsegment vollständig abgesenkt wird, wobei der erste und zweite Zentrierdorn so in die erste bzw. zweite Zentrierausnehmung des zweiten Turmsegmentes eingreift, dass das zweite Turmsegment in seine gewünschte, ausgerichtete Position auf dem ersten Turmsegment geführt wird.

2. Verfahren nach Anspruch 1, wobei das zweite Turmsegment oder ein anderes Turmsegment mit einer Hebevorrichtung angehoben und abgesetzt wird, wobei die Hebevorrichtung, insbesondere Traverse, zum Heben eines ersten Turmsegmentes eines Betonturms einer Windenergieanlage mittels eines Krans ausgeführt ist, umfassend:
- wenigstens ein Befestigungsmittel zum Befestigen des Turmsegmentes an der Hebevorrichtung und
- wenigstens eine Auslösevorrichtung zum Lösen einer Verbindung zwischen der Hebevorrichtung und dem Turmsegment.

3. Verfahren nach Anspruch 1 oder 2, wobei
der Führungsabschnitt aus Kunststoff gefertigt ist.

4. Verfahren nach Anspruch 1, wobei der erste Zentrierdorn einen um 20% - 70% kürzeren Führungsabschnitt aufweist als der zweite Zentrierdorn, vorzugsweise um 40% - 60% kürzer, wobei die Befestigungsabschnitte beider Zentrierdorne vorzugsweise die gleiche Größe aufweisen.

## Claims

1. Method for erecting a tower of a wind turbine comprising the steps of:
- arranging a first tower segment on a foundation or a tower segment,
wherein the first tower segment has a first and second centring mandrel at the upper side thereof, wherein the first centring mandrel has a shorter guiding portion than the second centring mandrel,
wherein the first and second centring mandrel are constructed to be secured to a first tower segment of a concrete tower of a wind turbine and to guide a second tower segment of the concrete tower when the second tower segment is lowered onto the first tower segment and has a securing portion for securing to the first tower segment, a guiding portion for guiding the second tower segment, wherein the securing portion has an outer thread, in particular a metal thread, for screwing into the first tower segment,
wherein the guiding portion is constructed in a conical manner and tapers in a direction facing away from the securing portion, wherein the securing portion and the guiding portion are constructed concentrically around a common axis,
- the second tower segment is partially lowered onto the first tower segment in such a manner that a first centring mandrel partially engages in a corresponding first centring recess at the lower side of the second tower segment,
- the second tower segment is pivoted about an axis of the first centring mandrel and the corresponding first centring receiving member until a second centring receiving member is arranged at the lower side of the second tower segment approximately above the second centring mandrel,
- the second tower segment is completely lowered, wherein the first and second centring mandrel engage in the first and second centring recess of the second tower segment, respectively, in such a manner that the second tower segment is guided in the desired orientated position thereof on the first tower segment.

2. Method according to claim 1, wherein the second tower segment or another tower segment is raised and deposited with a lifting device, wherein the lifting device, in particular cross-member, is constructed for lifting a first tower segment of a concrete tower of a wind turbine by means of a crane, comprising:
- at least one securing means for securing the tower segment to the lifting device, and
- at least one release device for releasing a connection between the lifting device and the tower segment.

3. Method according to claim 1 or 2, wherein the guiding portion is produced from plastics material.

4. Method according to claim 1, wherein the first centring mandrel has a guiding portion which is 20%-70% shorter than the second centring mandrel, preferably 40-60% shorter, wherein the securing portions of both centring mandrels are preferably of the same size.

## Revendications

1. Procédé de construction d'une tour d'une éolienne comprenant les étapes :
- l'agencement d'un premier segment de tour sur une fondation ou un segment de tour,
dans lequel le premier segment de tour présente une première et seconde épine de centrage au niveau de son côté supérieur, dans lequel la première épine de centrage présente une section de guidage plus courte que la seconde épine de centrage,
dans lequel la première et seconde épine de centrage sont configurées pour la fixation à un premier segment de tour d'une tour de béton d'une éolienne et pour le guidage d'un second segment de tour de la tour de béton pour l'abaissement du second segment de tour au niveau du premier segment de tour et présente une section de fixation pour la fixation au premier segment de tour, une section de guidage pour le guidage du second segment de tour,
dans lequel la section de fixation présente un filet extérieur, en particulier un filet métallique, pour le vissage dans le premier segment de tour,
dans lequel la section de guidage est réalisée de manière conique et se rétrécit dans une direction éloignée de la section de fixation,
dans lequel la section de fixation et la section de guidage sont réalisées de manière concentrique autour d'un axe commun,
- le second segment de tour est abaissé partiellement sur le premier segment de tour de sorte qu'une première épine de centrage soit en prise partiellement dans un premier évidement de centrage correspondant au niveau du côté inférieur du second segment de tour,
- le second segment de tour est pivoté autour d'un axe de la première épine de centrage et du premier logement de centrage correspondant jusqu'à ce qu'un second logement de centrage soit disposé au niveau du côté inférieur du second segment de tour à peu près au-dessus de la seconde épine de centrage,
- le second segment de tour est complètement abaissé, dans lequel la première et seconde épine de centrage se mettent en prise dans le premier ou second évidement de centrage du second segment de tour de sorte que le second segment de tour soit guidé dans sa position orientée souhaitée sur le premier segment de tour.

2. Procédé selon la revendication 1, dans lequel le second segment de tour ou un autre segment de tour est levé et abaissé avec un dispositif de levage, dans lequel le dispositif de levage, en particulier une traverse, est réalisé pour le levage d'un premier segment de tour d'une tour en béton d'une éolienne au moyen d'une grue, comprenant :
- au moins un moyen de fixation pour la fixation du segment de tour au dispositif de levage et
- au moins un dispositif de détachement pour le détachement d'une liaison entre le dispositif de levage et le segment de tour.

3. Procédé selon la revendication 1 ou 2, dans lequel
la section de guidage est fabriquée en matière plastique.

4. Procédé selon la revendication 1, dans lequel la première épine de centrage présente une section de guidage plus courte de 20 % à 70 % que la seconde épine de centrage, de préférence plus courte de 40 % à 60 %, dans lequel les sections de fixation des deux épines de centrage présentent de préférence la même grandeur.
